(19) Europäisches Patentamt / European Patent Office / Office européen des brevets

(11) **EP 3 130 753 B1**

(12) **EUROPEAN PATENT SPECIFICATION**

(45) Date of publication and mention
of the grant of the patent:
**30.03.2022 Bulletin 2022/13**

(51) International Patent Classification (IPC):
**F01D 5/08** (2006.01)     **F02C 7/18** (2006.01)
**F02C 9/18** (2006.01)

(21) Application number: **16184087.1**

(22) Date of filing: **12.08.2016**

(52) Cooperative Patent Classification (CPC):
**F01D 5/081; F02C 7/18; F02C 9/18;** F05D 2260/14

(54) **GAS TURBINE UNIT WITH ADAPTIVE PRE-SWIRLER**

GASTURBINENEINHEIT MIT ADAPTIVEM VORVERWIRBLER

UNITÉ DE TURBINE À GAZ AVEC PRÉ-TOURBILLONNEMENT ADAPTATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2015 IT UB20153103**

(43) Date of publication of application:
**15.02.2017 Bulletin 2017/07**

(73) Proprietor: **ANSALDO ENERGIA S.p.A.**
**16152 Genova (IT)**

(72) Inventors:
• **TAPPANI, Marco**
  **16148 Genova (IT)**
• **MANTERO, Marco**
  **16129 Genova (IT)**

(74) Representative: **Bernotti, Andrea et al**
**Studio Torta S.p.A.**
**Via Viotti, 9**
**10121 Torino (IT)**

(56) References cited:
**GB-A- 2 260 787**     **US-A1- 2011 250 057**
**US-A1- 2013 045 083**

EP 3 130 753 B1

**Description**

The present invention relates to a gas turbine unit with adaptive pre-swirler.

As is known, in gas turbine systems, the blades and other turbine expansion stage components must be cooled during use, as otherwise they would be damaged in a short time by the extremely high temperature of the working fluid (hot gases expelled from the combustion chamber). Fresh air is usually used for cooling, drawn from the compressor and supplied through a cooling circuit (also called a secondary air circuit) defined by fluid passages obtained partly between the rotor and stator and partly inside the blades. The cooling air then flows out through holes on the surface of the blades, and is introduced into the main flow of working fluid.

Cooling is necessary for both the rotor and stator blades. For the former, however, the implementation of efficient cooling systems presents more significant problems, because the cooling air passes between fixed and rotating components. Possible reductions in pressure in the circuit supplying the cooling air may even lead to increases in temperature, reducing the efficiency of the cooling system. Apart from a possible decline in machine output, an inefficient cooling system may lead to a premature deterioration of the turbine components or even, in some cases, catastrophic damage. In order to avoid such inconveniences, a rotation about the main axis of the machine must be imparted to the cooling airflow so that the tangential speed component of the cooling airflow remains proportionate to the rotor speed. This means that there must be a determined ratio, also called a swirl ratio, between the tangential speed component of the cooling airflow from the stator and the tangential speed of the rotor at the distance from the main axis at which the cooling airflow passes between the fixed and rotating component.

This aim is generally achieved by using a swirler or pre-swirler along the cooling circuit to deviate the airflow in the desired way.

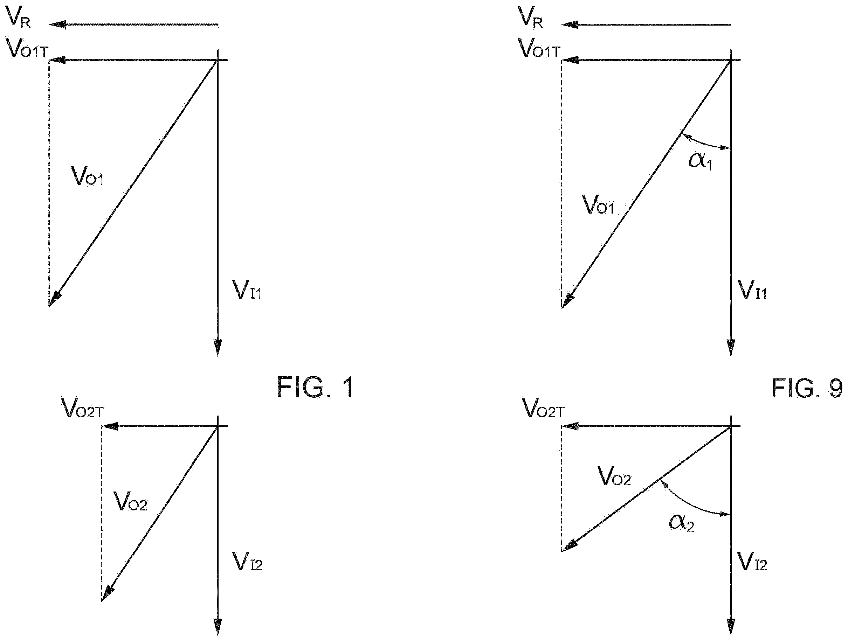

However, the solutions known in the prior art have significant limitations. The pre-swirlers are designed to achieve an optimum swirl ratio in certain working conditions, in which the gas turbine operates for most of the time. In these operating conditions, the airflow speed is predictable and constant, and therefore the rotation to be imparted to the airflow so that it is proportionate to the rotor speed can also be determined. However, the operating conditions are not always the same. In modern systems used to produce electricity, for example, the power supplied to the distribution networks must be proportionate to user demand and the projected use as defined by local operators, with significant differences in daily cycles (in particular, there are generally periods of operation at nominal power and periods of operation at the lowest possible capacity). The individual plants are also required to take part in monitoring network frequency, and therefore contributions may be requested at unforeseeable times. When the power supplied changes, the speed module of the airflow in the pre-swirler also changes according to the difference in required output, while its direction essentially remains constant, as does the speed of the rotor. The reduction in airflow speed leads to a corresponding reduction in the tangential component, which is therefore no longer proportionate to the rotor speed according to the optimum swirl ratio. The consequence when using pre-swirlers of the type known in the prior art is illustrated by way of example in figure 1, where the vector $V_R$ represents the tangential speed of the rotor at a distance from the main axis that corresponds to the pre-swirler outlet; the vectors $V_{I1}$, $V_{I2}$ represent the speed of the cooling airflow at the pre-swirler inlet in a first operating condition (for example at nominal power) and in a second operating condition (for example at minimum capacity), respectively; and the vectors $V_{O1}$, $V_{O2}$ represent the speed of the cooling airflow at the pre-swirler outlet in the first operating condition and in the second operating condition, respectively.

The vectors $V_{O1}$, $V_{O2}$ necessarily have different tangential components $V_{O1T}$, $V_{O2T}$ in the direction of the vector $V_R$. It is therefore evident that the ratio between the tangential speed component of the airflow from the pre-swirler and the tangential speed of the rotor only gives the optimum swirl ratio, for example 1, in one operating condition. Apart from this specific condition, for example if there is a reduction in the speed of the airflow conveyed through the pre-swirler (as occurs with the vector $V_{I2}$), the ratio between the tangential speed of the airflow from the pre-swirler and the tangential speed of the rotor moves away from the optimum value.

GB 2 260 787 A discloses a gas turbine unit comprising: a compressor and a turbine, extending along a main axis; a cooling circuit configured to convey a cooling airflow from the compressor toward the turbine; and a pre-swirler, arranged along the cooling circuit and configured to impart a rotation about the main axis to the cooling airflow. The pre-swirler comprises a plurality of flow channels each having an inlet portion with a first passage section, an outlet portion with a second passage section, and a joining section between the inlet portion and the outlet portion.

The aim of the present invention is therefore to provide a gas turbine that can overcome or at least reduce the limits described above, and that, in particular, makes it possible to adapt the tangential speed component of the cooling airflow to the speed of the rotor in a plurality of operating conditions.

According to the present invention, there is provided a gas turbine unit as defined in claim 1.

The present invention will now be described with reference to the drawings attached hereto, illustrating some non-limiting embodiments thereof, in which:

-    figure 1 is a diagram illustrating quantities referring to a gas turbine unit known in the prior art;
-    figure 2 is a side view, cut along an axial, longitudinal plane, of a gas turbine unit according to an embodiment of the present invention;

- figure 3 displays an enlarged portion of the gas turbine unit in figure 2;
- figure 4 is a perspective view of a portion of a component of the gas turbine in figure 1;
- figure 5 is a perspective view of the component in figure 4, in a sectional view along the plane V-V in figure 4;
- figure 6 is a schematic view of a part of the component in figure 4;
- figure 7 is a schematic view of the same part of the component in figure 4, in a first operational configuration;
- figure 8 is a schematic view of the same part of the component in figure 4, in a second operational configuration;
- figure 9 is a diagram illustrating quantities referring to the gas turbine unit in figure 2;
- figure 10 is a perspective view of a portion of a component of a gas turbine unit, according to an alternative embodiment of the present invention;
- figure 11 is a plane representation of the component in figure 10; and
- figure 12 is a side view, cut along an axial, longitudinal plane, of a portion of a component of a gas turbine unit according to another alternative embodiment of the present invention.

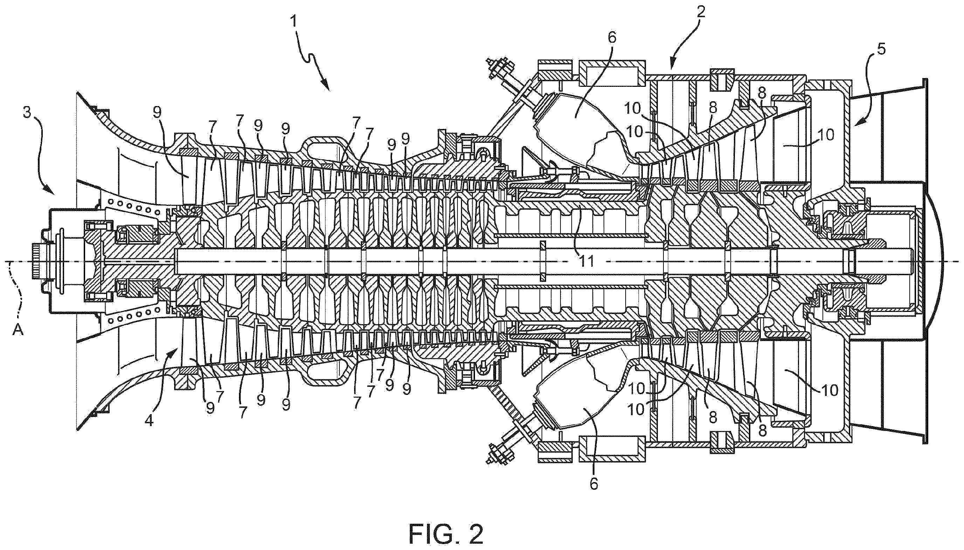

In figure 2, a gas turbine unit 1 for an electrical energy production system is illustrated as a whole.

The gas turbine unit 1 comprises a stator 2, a rotor 3, which extends along a main axis A, and a combustion chamber 6.

The stator 2 defines a case for accommodating the rotor 3 rotatably about the main axis A. Furthermore, the stator 2 and the rotor 3 form a compressor 4 and a turbine 5 with said stator 3.

More precisely, the rotor 3 is equipped with a plurality of compressor rotor blades 7 and turbine rotor blades 8, arranged in annular arrays, which are positioned successively along the axis A of the rotor 3.

Arrays of compressor stator vanes 9 and turbine stator vanes 10 are attached to the case 2, between the compressor rotor blades 7 and the turbine rotor blades 8, respectively.

The compressor 4 and the turbine 5 are separated by a rotating member called the central hollow shaft 11.

In the embodiment described here, the combustion chamber 6 is of the toroidal type and is positioned about the central hollow shaft 11, between the compressor 4 and the turbine 5. However, this should not be considered the only option, as the invention may also be advantageously used with different types of combustion chambers, particularly of the silo or canannular type.

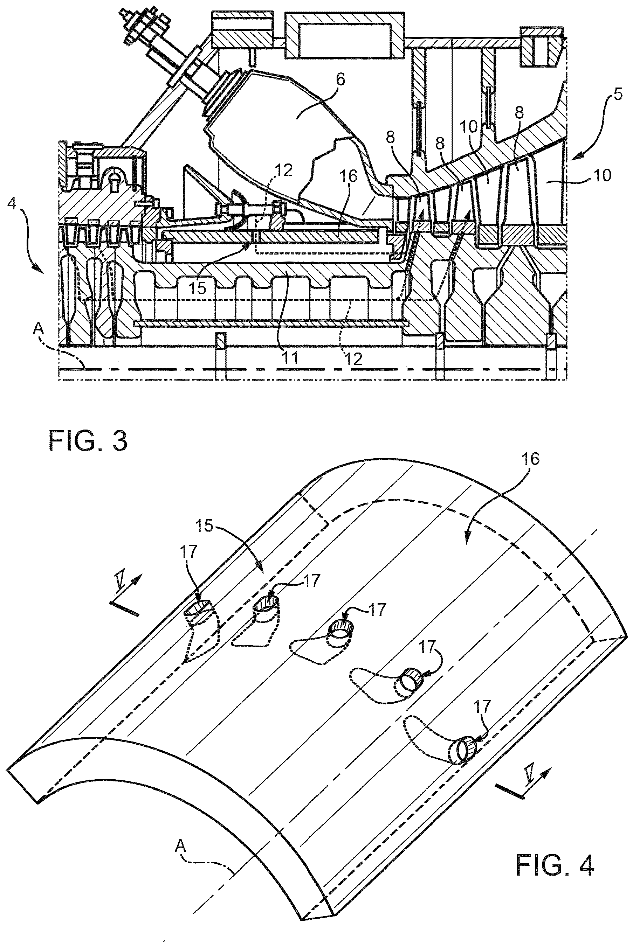

With reference to the schematic representation in figure 3, a cooling circuit 12 extends partly in the stator 2 and partly in the rotor 3 to allow a cooling airflow AF to be supplied from the compressor 4 to the turbine 5, in order to avoid overheating of the turbine rotor blades 8 and of the turbine stator vanes 10. The cooling circuit 12 comprises a pre-swirler 15, which is configured to impart a rotation about the axis A to the cooling airflow AF conveyed from the compressor 4.

According to one embodiment, the pre-swirler 15 is incorporated in a portion of the stator 2 called the shaft cover 16 and essentially defined by a cylindrical wall located around the central hollow shaft 11. The pre-swirler 15 fluidically couples a first portion of the cooling circuit 12, immediately downstream of the compressor 4, and a second portion of the cooling circuit 12, which extends in an annular cavity between the shaft cover 16 (which is fixed as it is part of the stator 2) and the central hollow shaft 11 (which rotates as it is part of the rotor 3).

With reference to figures 4-6, the pre-swirler 15 comprises a plurality of flow channels 17 arranged about the main axis A. According to one embodiment, the flow channels 17 are through holes in the shaft cover 16 and extend along respective curved paths about the main axis A. In particular, the shape of the flow channels 17 allows to modify a tangential speed component of the cooling airflow AF in accordance with the angular speed of the rotor 3, which is substantially constant. Here and in the rest of this document, a speed vector applied at a given point, in particular with regard to the cooling airflow AF, will be understood as having an axial component, parallel to the main axis A, a radial component, perpendicular to the main axis A, and a tangential component, positioned tangentially to a circumference that is concentric to the main axis A and with a radius equal to the distance from the main axis A of the base or starting point of the speed vector.

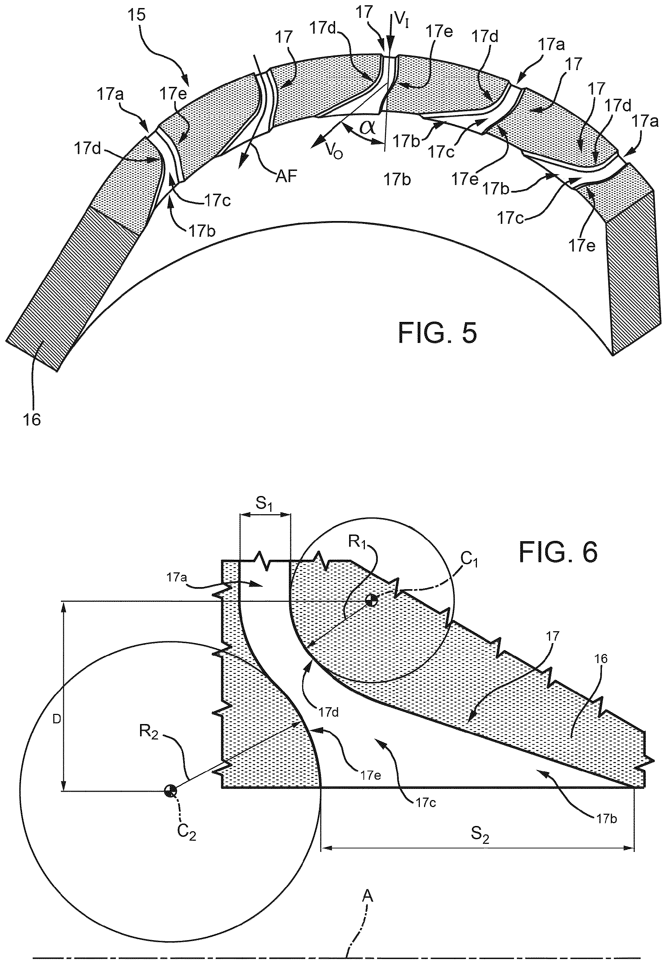

More precisely (see figure 6 in particular), each airflow channel 17 comprises an inlet portion 17a, an outlet portion 17b and a joining section 17c between the inlet portion 17a and the outlet portion 17b. In addition, a median line on the flow channel 17 extends substantially in a plane, for example (though not necessarily) a plane perpendicular to the main axis A.

The inlet portion 17a may be radial. The outlet portion 17b has a width such as to allow the cooling airflow AF to leave the pre-swirler 15 at an outlet speed $V_O$ that forms an outlet angle $\alpha$ (figure 5) variable within a range, for example comprised between 40° and 89°, with respect to the direction of the inlet speed $V_I$ in the inlet portion 17a. To this end, the ratio between a passage section $S_1$ of the inlet portion 17a and a passage section $S_2$ of the outlet portion 17b is comprised between 0.3 and 3.

The joining section 17c defines a first curve and is configured to deviate the cooling airflow AF by Coanda effect, by a variable angle according to the absolute value of the inlet speed $V_I$. In particular, the joining section 17c is delimited by a first side wall 17d inside the first curve, and by a second side wall 17e opposite the first side wall 17d and outside the first curve.

The first side wall 17d may have a constant curvature radius. To obtain the desired deflection by Coanda effect with an inlet speed $V_I$ comprised between 20 m/s and 250 m/s, the ratio between the equivalent diameter of the passage section $S_1$ of the inlet portion 17a and the curvature radius $R_1$ of the first side wall 17d is comprised between 0.02 and 6. Here and in the rest of this document, the "equivalent diameter" of a given channel is understood to mean the diameter of a channel with a circular cross section with an area equivalent to the area of the passage section of the given channel.

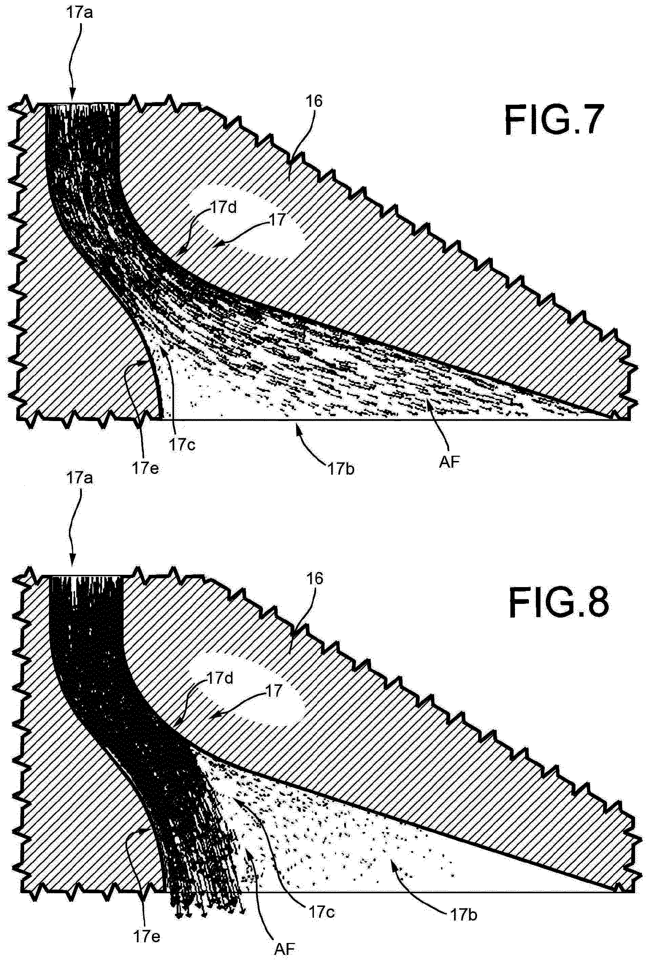

In these conditions, the cooling airflow AF tends to adhere to the first internal side wall 17d of the first curve of the flow channel 17 and is therefore deviated to a detachment point, as shown in figure 7 (at low inlet speeds, the detachment point may correspond to the outlet edge of the flow channel 17). With respect to the path in the flow channel 17, the detachment point from the internal wall 17d moves further back as the absolute speed value increases. The cooling airflow AF is therefore deflected to a greater extent, and is subjected to a larger rotation when the inlet speed $V_I$ has a lower absolute value, and vice versa.

In the outlet portion 17b, the second side wall 17e defines a second curve, which, when lapped against by the cooling airflow AF, imparts an opposite rotation to that imparted by the first curve. Here and in the rest of this document, 'opposite rotation' or 'rotation in the opposite direction' are taken to mean that if in a given system the first curve imparts a clockwise rotation to the cooling airflow AF, the second curve imparts an anticlockwise rotation in the same given system (and vice versa). Practically speaking, the second curve gives the second side wall 17e a divergent profile with respect to the first side wall 17d on a plane perpendicular to the main axis A and which contains the median line of the flow channel 17. The shape of the second side part 17e makes an additional contribution with respect to that made by the first side wall 17d, and allows the range of outlet angles $\alpha$ of the outlet speed $V_O$ that can be obtained with the pre-swirler 15 to be increased further. Moreover, the second curve is designed to be completely lapped against by the cooling airflow AF only when the absolute speed value exceeds a critical threshold within the accepted range (figure 8). This critical threshold is carefully defined according to the operating conditions of the gas turbine unit and may correspond to the speed of the cooling airflow AF under full load conditions. For absolute speed values below the threshold, the cooling airflow AF is deviated by the second side wall 17e in order not to reach the second curve (figure 7). In these cases, the second curve is practically irrelevant. According to a non-limiting embodiment, the radial distance D (the difference between the distances from the main axis A, figure 6) between the curvature center $C_1$ of the first curve and the curvature center $C_2$ of the second curve is equal to the arithmetic mean of the curvature radius $R_1$ of the first

curve and the curvature radius $R_2$ of the second curve, calculated with a multiplicative coefficient K, for example of less than 10:

$$D = K \frac{R1 + R2}{2}$$

When the inlet speed $V_I$ is close to the minimum values in the accepted range, the deflection by Coanda effect due to the first curve is at its highest. The cooling airflow AF is not significantly affected by the second curve.

As the inlet speed $V_I$ increases, the detachment point from the first side wall 17d moves back and therefore the rotation imparted by the first curve progressively decreases.

When the inlet speed comes close to the critical threshold, the effect of the second curve in the second side wall 17e becomes appreciable. Practically speaking, the second curve imparts a rotation opposite to that imparted by the first curve on the cooling airflow AF, further decreasing the overall rotation provided by the flow channel 17.

The balance between the increase in the absolute value of the speed of the cooling airflow AF and the decrease in the rotation causes the tangential speed component to remain essentially constant in all operating conditions of the gas turbine unit 1, as shown in a qualitative representation in figure 9. As can be seen, an inlet speed $V_{I1}$ with a greater absolute value corresponds to a rotation of the outlet speed $V_{O1}$ at a smaller angle $\alpha_1$, while an inlet speed $V_{I2}$ with a smaller absolute value corresponds to a rotation of the outlet speed $V_{O2}$ at a larger angle $\alpha_2$. The tangential speed component $V_{O1T}$, $V_{O2T}$ is essentially the same in both cases.

The efficiency of the cooling circuit 12 is therefore at an optimum level in all operating conditions and the risk of changes in the speed of the cooling airflow AF causing reductions in pressure and rises in temperature, which can affect the overall efficiency of the machine and in the long term its entire structure, is avoided or at least significantly reduced.

Moreover, advantageously, the result is achieved by exploiting the Coanda effect. Due to its shape, the pre-swirler 15 is thus able to adapt the tangential speed component of the cooling airflow AF according to the operating conditions without the need for adjustments and moving parts. In particular, the first curve makes it possible to achieve high deflections at a low speed. The second curve, by contrast, reduces the rotation of the cooling airflow AF at high speed, essentially making it possible to widen the range of accepted speeds.

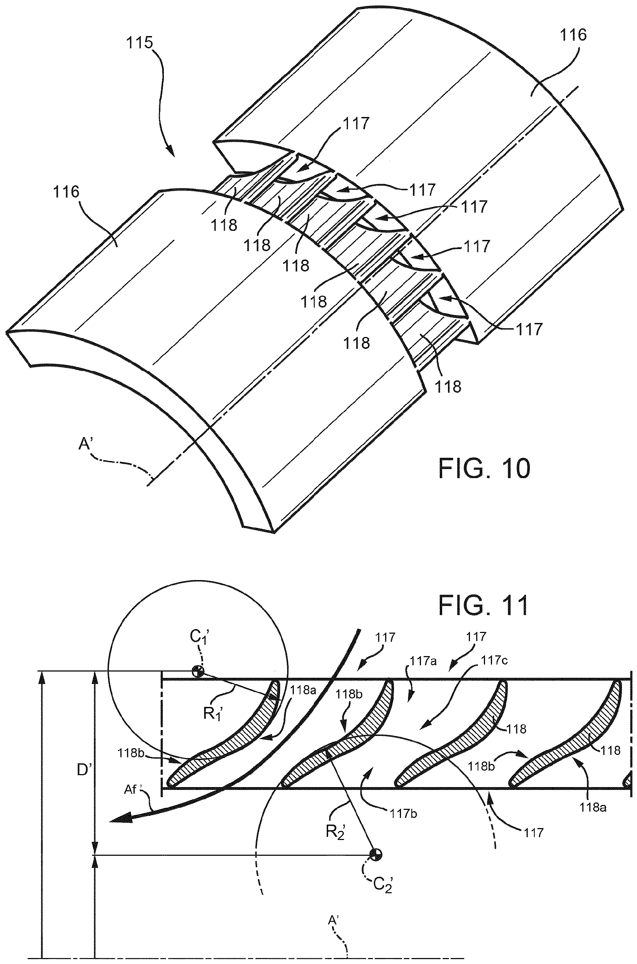

According to one embodiment, shown in figures 10 and 11, a pre-swirler 115 obtained in a shaft cover 116 of a gas turbine unit (not entirely illustrated) comprises a plurality of tangential vanes 118 that define identical flow channels 117 about the main axis, indicated here with A'. The plane representation of the pre-swirler 115 is illustrated in figure 11. In detail, each vane 118 has a first face 188a and a second face 118b opposite one another. Each channel 117 is therefore defined by the first face 118a of a vane 118 and the second face 118b of an adjacent vane 118. The flow channel 117 is curved and comprises an inlet portion 117a, an outlet portion 117b and a joining section 117c between the inlet portion 117a and the outlet portion 117b. The joining section 117c forms a first curve, delimited on an inner side by the first face 118a of one respective vane 118 and on an outer side by the second face 118b of the other respective vane 118. The first curve of the joining section 117c is configured to deviate the cooling airflow AF' about the main axis A' by Coanda effect by a variable angle according to the absolute value of the inlet speed $V_I$'. Moreover, the outlet portion 117b forms a second curve, that, again by Coanda effect, imparts an opposite rotation to the cooling airflow AF' when the absolute speed value comes close to a critical threshold. The second curve is defined by an end part of the second face 118b of the vane 118 that delimits the flow channel 117.

To achieve the desired deviation of the airflow by Coanda effect, according to a non-limiting embodiment the airflow channel 117 may have the parameters already defined with reference to figures 3-9, in particular: the radial distance D' between the curvature center $C_1$' of the first curve and the curvature center $C_2$' of the second curve equal to the arithmetic mean of the curvature radius $R_1$' of the first curve and the curvature radius $R_2$' of the second curve, calculated with a multiplicative coefficient K', for example of less than 10 $(D'=K'\frac{R1'+R2'}{2})$.

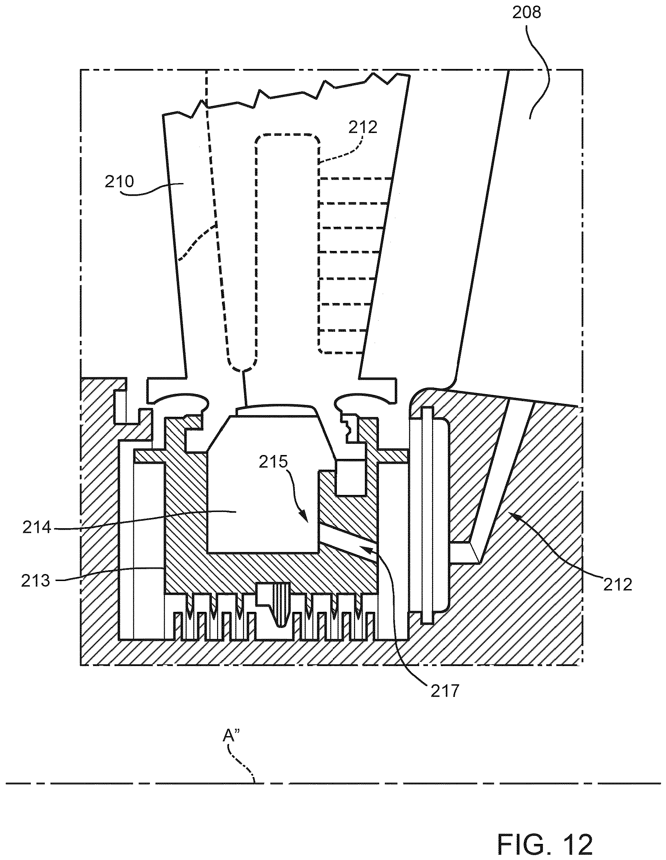

According to one embodiment, illustrated in figure 12, a gas turbine unit (only partially illustrated) comprises a cooling circuit 212 which extends partially through turbine stator vanes 201 and turbine rotor blades 208. The cooling circuit comprises, at least in a turbine stage, a ring 213 having a U-shaped cross section and defining an annular chamber 214. The ring 213 joins the ends of the turbine stator vanes 210 and, apart from having a structural function, also acts as a recipient to convey the cooling airflow towards the portion of the cooling circuit that extends inside the turbine rotor blades 208. The ring 213 is equipped with a pre-swirler 215 that comprises a plurality of flow channels 217. According to one embodiment, the flow channels 217 are defined by holes that join the chamber 214 with the external part of the ring 213 and extend diagonally in relation to the main axis A". The flow channels 217 are shaped to impart a rotation about the main axis A" by Coanda effect according to the cooling airflow speed, essentially as described above. In particular, the flow channels 217 form a first curve, with an internal wall that imparts the highest rotation at low speeds of the cooling airflow; and a second curve that imparts a rotation opposite to that imparted by the first curve when the speed of the cooling airflow approaches the critical threshold.

**Claims**

1. A gas turbine unit comprising:

a compressor (4) and a turbine (5), extending along a main axis (A; A'; A");
a cooling circuit (12; 112; 212) configured to convey a cooling airflow (AF; AF') from the compressor (4) toward the turbine (5); and
a pre-swirler (15; 115; 215), arranged along the cooling circuit (12; 112; 212) and configured to impart a rotation about the main axis (A; A'; A") to the cooling airflow (AF; AF');
the pre-swirler (15; 115; 215) comprising a plurality of flow channels (17; 117; 217) each having an inlet portion (17a; 117a) with a first passage section ($S_1$; $S_1$'), an outlet portion (17b; 117b) with a second passage section ($S_2$; $S_2$'), and a joining section (17c; 117c) between the inlet portion (17a; 117a) and the outlet portion (17b; 117b);
wherein the joining section (17c; 117c) forms a first curve shaped so that a first wall (17d; 118a) of the joining section (17c; 117c), defining an inner side of the first curve, deviates the cooling airflow (AF; AF') about the main axis (A; A'; A") by Coanda effect of an angle correlated to an absolute value of an inlet speed ($V_I$) of the cooling airflow (AF; AF'); and
the second passage section ($S_2$) of the outlet portion (17b; 117b) is such as to allow a plurality of outlet angles of the cooling airflow (AF; AF'), in accordance with the rotation caused by the joining section (17c; 117c);
**characterized in that** the first wall (17d; 118a) of the joining section (17c; 117c) is configured so that the cooling airflow (AF; AF') is deflected about the main axis (A, A'; A") by a greater angle when the inlet speed ($V_I$) is lower in absolute value and by a smaller angle when the inlet speed ($V_I$) is greater in absolute value;
wherein the flow channels (17; 117; 217) are shaped so that an outlet speed ($V_O$) of the cooling airflow (AF; AF') at an outlet of the pre-swirler (15; 115; 215) forms an outlet angle ($\alpha$) comprised between 40° and 89°, with respect to a direction of the inlet speed ($V_I$);
wherein a ratio between the first passage section ($S_1$; $S_1$') of the inlet portion (17a; 117a) and the second passage section ($S_2$; $S_2$') of the outlet portion (17b; 117b) is comprised between 0.3 and 3;
and wherein a ratio between an equivalent diameter of the first passage section ($S_1$; $S_1$') of

the inlet portion (17a; 117a) and a first curvature radius ($R_1$; $R_1$') of the first wall (17d; 118a) is comprised between 0.02 and 6.

2. The gas turbine unit according to claim 1, wherein each flow channel (17; 117; 217) is delimited by a second wall (17e; 118b) opposite to the first wall (17d; 118a) and defining a second curve that, when lapped against by the cooling airflow (AF; AF'), by Coanda effect imparts to the cooling airflow (AF; AF') a rotation opposite to the rotation imparted by the first curve.

3. The gas turbine unit according to claim 2, wherein the second curve is arranged at a portion of the second wall (17d; 118b) reached by the cooling airflow (AF; AF') when the absolute value of the inlet speed ($V_I$) is greater than a threshold and non-interacting with the cooling airflow (AF; AF') when the absolute value of the inlet speed ($V_I$) is lower than the threshold.

4. The gas turbine unit according to any one of claims 1 to 3, wherein a radial distance (D) between a curvature center ($C_1$; $C_1$') of the first curve and a curvature center ($C_2$; $C_2$') of the second curve is correlated to the first curvature radius ($R_1$; $R_1$') of the first curve and to a second curvature radius ($R_2$; $R_2$') of the second curve.

5. The gas turbine unit according to claim 4, wherein the radial distance (D) between the curvature center ($C_1$; $C_1$') of the first curve and the curvature center ($C_2$; $C_2$') of the second curve is proportional to an average of the first curvature radius ($R_1$; $R_1$') of the first curve and the second curvature radius ($R_2$; $R_2$') of the second curve.

**Patentansprüche**

1. Gasturbineneinheit, umfassend:

einen Verdichter (4) und eine Turbine (5), die sich entlang einer Hauptachse (A; A'; A") erstrecken;
einen Kühlkreislauf (12; 112; 212), der dafür konfiguriert ist, einen Kühlluftstrom (AF; AF') von dem Verdichter (4) zu der Turbine (5) zu transportieren; und
einen Vorverwirbler (15; 115; 215), der entlang des Kühlkreislaufs (12; 112; 212) angeordnet ist und dafür konfiguriert ist, dem Kühlluftstrom (AF; AF') einen Drall um die Hauptachse (A; A'; A") zu verleihen;
wobei der Vorverwirbler (15; 115; 215) eine Vielzahl von Strömungskanälen (17; 117; 217) umfasst, die jeweils einen Einlassteil (17a; 117a) mit einem ersten Kanalabschnitt ($S_1$; $S_1$'), einen Auslassteil (17b; 117b) mit einem zweiten Kanalabschnitt ($S_2$; $S_2$') und einen Verbindungsabschnitt (17c; 117c) zwischen dem Einlassteil (17a; 117a) und dem Auslassteil (17b; 117b) haben;
wobei der Verbindungsabschnitt (17c; 117c) eine erste Krümmung bildet, die so geformt ist, dass eine erste Wand (17d; 118a) des Verbindungsabschnitts (17c; 117c), die eine Innenseite der ersten Krümmung bildet, den Kühlluftstrom (AF; AF') um die Hauptachse (A; A'; A") durch den Coanda-Effekt eines Winkels, der mit einem Absolutwert der Einlassgeschwindigkeit ($V_I$) des Kühlluftstroms (AF; AF') in Korrelation steht, ablenkt; und
der zweite Kanalabschnitt ($S_2$) des Auslassteils (17b; 117b) so ist, dass er eine Vielzahl von Austrittswinkeln des Kühlluftstroms (AF; AF') in Übereinstimmung mit dem von dem Verbindungsabschnitt (17c; 117c) verursachten Drall erlaubt;
**dadurch gekennzeichnet, dass** die erste Wand (17d; 118a) des Verbindungsabschnitts (17c; 117c) so konfiguriert ist, dass der Kühlluftstrom (AF; AF') um die Hauptachse (A, A'; A") um einen größeren Winkel abgelenkt wird, wenn die Einlassgeschwindigkeit ($V_I$) einen niedrigeren Absolutwert hat, und um einen kleineren Winkel, wenn die Einlassgeschwindigkeit ($V_I$) einen größeren Absolutwert hat;
wobei die Strömungskanäle (17; 117; 217) so geformt sind, dass eine Austrittsgeschwindigkeit ($V_O$) des Kühlluftstroms (AF; AF') an einem Auslass des Vorverwirblers (15; 115; 215) einen Austrittswinkel ($\alpha$) bildet, der bezogen auf eine Richtung der Einlassgeschwindigkeit ($V_I$) zwischen 40° und 89° beträgt;
wobei ein Verhältnis zwischen dem ersten Kanalabschnitt ($S_1$; $S_1$') des Einlassteils (17a; 117a) und dem zweiten Kanalabschnitt ($S_2$; $S_2$') des Auslassteils (17b; 117b) zwischen 0,3 und 3 beträgt;
und wobei ein Verhältnis zwischen einem äquivalenten Durchmesser des ersten Kanalabschnitts ($S_1$; $S_1$') des Einlassteils (17a; 117a) und einem ersten Krümmungsradius ($R_1$; $R_1$') der ersten Wand (17d; 118a) zwischen 0,02 und 6 beträgt.

2. Gasturbineneinheit nach Anspruch 1, wobei jeder Strömungskanal (17; 117; 217) durch eine der ersten Wand (17d; 118a) gegenüberliegende zweite Wand (17e; 118b) begrenzt ist, die eine zweite Krümmung bildet, die dann, wenn der Kühlluftstrom (AF; AF') sie überstreicht, durch den Coanda-Effekt dem Kühlluftstrom (AF; AF') einen Drall verleiht, der dem durch die erste Krümmung verliehenen Drall entgegengesetzt ist.

3. Gasturbineneinheit nach Anspruch 2, wobei die zweite Krümmung in einem Teil der zweiten Wand (17d; 118b) angeordnet ist, der von dem Kühlluftstrom (AF; AF') erreicht wird, wenn der Absolutwert der Einlassgeschwindigkeit ($V_I$) größer als ein Schwellenwert ist, und mit dem Kühlluftstrom (AF; AF') nicht wechselwirkt, wenn der Absolutwert der Einlassgeschwindigkeit ($V_I$) kleiner als der Schwellenwert ist.

4. Gasturbineneinheit nach einem der Ansprüche 1 bis 3, wobei ein radialer Abstand (D) zwischen einem Krümmungsmittelpunkt ($C_1$; $C_1$') der ersten Krümmung und einem Krümmungsmittelpunkt ($C_2$; $C_2$') der zweiten Krümmung mit dem ersten Krümmungsradius ($R_1$; $R_1$') der ersten Krümmung und mit einem zweiten Krümmungsradius ($R_2$; $R_2$') der zweiten Krümmung in Korrelation steht.

5. Gasturbineneinheit nach Anspruch 4, wobei der radiale Abstand (D) zwischen dem Krümmungsmittelpunkt ($C_1$; $C_1$') der ersten Krümmung und dem Krümmungsmittelpunkt ($C_2$; $C_2$') der zweiten Krümmung proportional zu einem Durchschnitt des ersten Krümmungsradius ($R_1$; $R_1$') der ersten Krümmung und des zweiten Krümmungsradius ($R_2$; $R_2$') der zweiten Krümmung ist.

## Revendications

1. Unité de turbine à gaz comprenant :

    un compresseur (4) et une turbine (5), s'étendant le long d'un axe principal (A ; A' ;A") ;
    un circuit de refroidissement (12 ; 112 ; 212) configuré pour acheminer un flux d'air de refroidissement (AF ; AF') depuis le compresseur (4) vers la turbine (5) ; et
    un pré-tourbillon (15 ; 115 ; 215), agencé le long du circuit de refroidissement (12 ; 112 ; 212) et configuré pour conférer une rotation autour de l'axe principal (A ; A' ; A") au flux d'air de refroidissement (AF ; AF') ;
    le pré-tourbillon (15 ; 115 ; 215) comprenant une pluralité de canaux d'écoulement (17 ; 117 ; 217) ayant chacun une portion d'entrée (17a ; 117a) avec une première section de passage ($S_1$ ; $S_1$'), une portion de sortie (17b ; 117b) avec une seconde section de passage ($S_2$ ; $S_2$'), et une section de jonction (17c ; 117c) entre la portion d'entrée (17a ; 117a) et la portion de sortie (17b ; 117b) ;
    dans laquelle la section de jonction (17c ; 117c) forme une première courbe mise en forme de sorte qu'une première paroi (17d ; 118a) de la section de jonction (17c ; 117c), définissant un côté interne de la première courbe, dévie le flux d'air de refroidissement (AF ; AF') autour de l'axe principal (A ; A' ; A") par effet Coanda d'un angle corrélé à une valeur absolue d'une vitesse d'entrée ($V_I$) du flux d'air de refroidissement (AF ; AF') ; et
    la seconde section de passage ($S_2$) de la portion de sortie (17b ; 117b) est telle qu'elle permet une pluralité d'angles de sortie du flux d'air de refroidissement (AF ; AF'), conformément à la rotation provoquée par la section de jonction (17c ; 117c) ;
    **caractérisée en ce que** la première paroi (17d ; 118a) de la section de jonction (17c ; 117c) est configurée de sorte que le flux d'air de refroidissement (AF ; AF') soit dévié autour de l'axe principal (A, A' ; A") d'un angle plus grand lorsque la vitesse d'entrée ($V_I$) est inférieure en valeur absolue et d'un angle plus petit lorsque la vitesse d'entrée ($V_I$) est supérieure en valeur absolue ;
    dans laquelle les canaux d'écoulement (17 ; 117 ; 217) sont mis en forme de sorte qu'une vitesse de sortie (Vo) du flux d'air de refroidissement (AF ; AF') à une sortie du pré-tourbillon (15 ; 115 ; 215) forme un angle de sortie ($\alpha$) compris entre 40° et 89°, vis-à-vis d'une direction de la vitesse d'entrée ($V_I$) ;
    dans laquelle un rapport entre la première section de passage ($S_1$ ; $S_1$') de la portion d'entrée (17a ; 117a) et la seconde section de passage ($S_2$ ; $S_2$') de la portion de sortie (17b ; 117b) est compris entre 0,3 et 3 ;
    et dans laquelle un rapport entre un diamètre équivalent de la première section de passage ($S_1$ ; $S_1$') de la portion d'entrée (17a ; 117a) et un premier rayon de courbure ($R_1$ ; $R_1$') de la première paroi (17d ; 118a) est compris entre 0,02 et 6.

2. Unité de turbine à gaz selon la revendication 1, dans laquelle chaque canal d'écoulement (17 ; 117 ; 217) est délimité par une seconde paroi (17e ; 118b) opposée à la première paroi (17d ; 118a) et définissant une seconde courbe qui, lorsqu'elle est empruntée par le flux d'air de refroidissement (AF ; AF'), par effet Coanda confère au flux d'air de refroidissement (AF ; AF') une rotation opposée à la rotation conférée par la première courbe.

3. Unité de turbine à gaz selon la revendication 2, dans laquelle la seconde courbe est agencée au niveau d'une portion de la seconde paroi (17d ; 118b) atteinte par le flux d'air de refroidissement (AF ; AF') lorsque la valeur absolue de la vitesse d'entrée ($V_I$) est supérieure à un seuil et n'interagit pas avec le flux d'air de refroidissement (AF ; AF') lorsque la valeur absolue de la vitesse d'entrée ($V_I$) est inférieure au seuil.

4.  Unité de turbine à gaz selon l'une quelconque des revendications 1 à 3, dans laquelle une distance radiale (D) entre un centre de courbure ($C_1$ ; $C_1$') de la première courbe et un centre de courbure ($C_2$ ; $C_2$') de la seconde courbe est corrélée au premier rayon de courbure ($R_1$ ; $R_1$') de la première courbe et à un second rayon de courbure ($R_2$ ; $R_2$') de la seconde courbe.

5.  Unité de turbine à gaz selon la revendication 4, dans laquelle la distance radiale (D) entre le centre de courbure ($C_1$ ; $C_1$') de la première courbe et le centre de courbure ($C_2$ ; $C_2$') de la seconde courbe est proportionnelle à une moyenne du premier rayon de courbure ($R_1$ ; $R_1$') de la première courbe et du second rayon de courbure ($R_2$ ; $R_2$') de la seconde courbe.

FIG. 1

FIG. 9

EP 3 130 753 B1

FIG. 2

FIG. 3

FIG. 4

FIG. 5

FIG. 6

FIG.7

FIG.8

FIG. 10

FIG. 11

208

212

210

214

215

213

212

217

A"

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2260787 A